Europäisches Patentamt

European Patent Office

Office européen des brevets

(19)

(11) Publication number: **0 300 712**
**B1**

# EUROPEAN PATENT SPECIFICATION

(12)

(45) Date of publication of the patent specification: 24.10.90

(51) Int. Cl.⁵: **F16L 3/22**

(21) Application number: 88306543.5

(22) Date of filing: 18.07.88

(54) Fastener.

(30) Priority: 18.07.87 GB 8717012

(43) Date of publication of application:
25.01.89 Bulletin 89/4

(45) Publication of the grant of the patent:
24.10.90 Bulletin 90/43

(84) Designated Contracting States:
BE DE ES FR GB IT NL SE

(56) References cited:
FR-A- 2 407 587
GB-A- 2 168 544

(73) Proprietor: FORD MOTOR COMPANY LIMITED, Eagle Way, Brentwood Essex CM13 3BW(GB)

(84) Designated Contracting States: BE ES GB IT NL SE

(73) Proprietor: FORD-WERKE AKTIENGESELLSCHAFT, Werk Köln-Niehl Henry-Ford-Strasse Postfach 60 40 02, D-5000 Köln 60(DE)

(84) Designated Contracting States: DE

(73) Proprietor: FORD FRANCE S. A., B.P. 307, F-92506 Ruell-Malmaison Cédex(FR)

(84) Designated Contracting States: FR

(72) Inventor: Snowton, Mark, 10 Saltcoates South Woodham Ferrers, Chelmsford Essex CM3 5LE(GB)

(74) Representative: Messulam, Alec Moses et al, A. Messulam & Co. 24 Broadway, Leigh on Sea Essex SS9 1BN(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to a fastener for securing together a number of elongate members such as pipes, tubes or cables into one bundle, and then allowing this bundle to be secured to a structure.

Particularly where a number of tubes are to be bundled together and then bent as a bundle to follow a specific contour, (so-called bundle bending), it is important that the pipes be firmly secured to one another. Subsequently, for serviceability of the pipes in the bundle, it must be possible for individual tubes or pipes to be removed or replaced from within the bundle.

GB-A 2 168 544 shows a device for fastening multiple electrical leads. Here, the leads are held in individual recesses around the circumference of a disc. As a result, the leads are not in contact with one another, and the fastened leads cannot be "bundle-bent". Furthermore, each lead has to be introduced individually into its recess from a different point on the disc circumference.

FR-A 2 407 587 shows a fixing collar for grouping together electrical cables. A shaped band is first wound around the group of cables, and then a metal strap holds the band in place around the cables. No means are disclosed for securing the group of cables to a fixed structure, and manual dexterity is required to wind the ban correctly around the cables and then to apply the strap to hold the band in the correct position.

According to the present invention there is provided a fastener for securing together a group of elongate members and for allowing the group to be attached to a fixed structure, the fastener having a first body which has a fixed shape and a cylindrical circumference, a recess parallel to the cylinder axis and adapted to accommodate the elongate members, the recess being connected to the circumference through a single access passage, and a second body having a cylindrical aperture and a supporting member by which the second body can be attached to a fixed structure, the cylindrical aperture being adapted to removably and rotatably receive the first body, wherein the recess in the first body forms seats for all the elongate members accommodated in the bores such that the elongate members are in contact one with another.

With this construction, the individual elongate members can be held relative to one another in the first body, and the first body can be held by the second body in the correct position in relation to the structure.

The bore or bores in the first body are preferably shaped so as to provide a form-fitting recess for each individual elongate member in order that the elongate members be held accurately in the correct relative positions. The bore or bores can be arranged so that the elongate members snap into their final positions.

The first body preferably has a limited degree of axial freedom of movement and complete rotational freedom of movement relative to the second body. This makes it easier to align the supporting member on the second body with a particular point on the fixed structure. There may also be a ratchet engagement between teeth on the first and second bodies to provide click-stop rotational location between the two parts, while allowing unimpeded relative axial movement.

The axial movement between the two bodies may be limited by moulding deflectable ears on the first body, or by moulding ears on one side of the body and a continuous lip on the other side. Such a lip can have a strengthening function on the first body.

The first body can be removed from the second body in an axial direction, after releasing a retaining catch.

The recess in the second body either is open at one portion around its circumference, or has a gate which can be opened to allow one of the elongate members to be radially withdrawn.

Both the first and second bodies are preferably made from plastics material, preferably injected moulded.

The supporting member which forms part of the second body can be a socket adapted to be fitted to a fir tree stud on the fixed structure.

The elongate members may be metal tubes or pipes for conducting the fuel and brake fluid in a motor vehicle, and the fixed structure can be the underbody of a motor vehicle.

The invention will now be further described by way of example, with reference to the accompanying drawings, in which;

Figure 1 shows a first embodiment of fastener in accordance with the invention;

Figure 2 shows a second embodiment;

Figure 3 is a top plan view of the fastener of Figure 2;

Figure 4 is a detail view of a first body for a fastener in accordance with the invention;

Figure 5 is a detailed section on the lines V–V from Figure 4;

Figure 6 shows a fastener forming a third embodiment of the invention; and

Figure 7 is a detail of the parts of the first and second bodies.

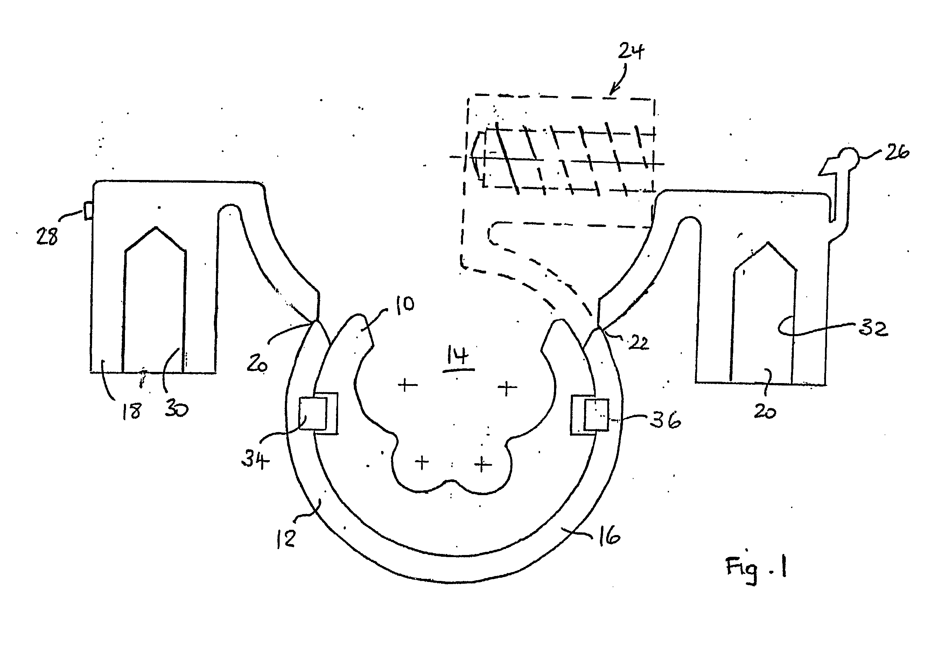

Figure 1 shows a fastener with a first body 10 and a second body 12.

The first body is a disc-like plastics moulding with a cutout region 14 which provides recesses for four tubular pipes. The position of the centre of each pipe is marked by a cross in Figure 1. From the geometry of the recess 14, it will be seen that when all four pipes are present in the recess, they will be retained there by contact with the walls of the recess and with each other.

The body 10 is received in an annulus 16 of the second body 12, and this annulus can be opened (the open position being shown in Figure 1) to allow pipes to be removed from within its centre. The body has three distinct regions, one being the annulus 16 and the other two being co-operating wings 18 and 20 which form a supporting member and are joined to the annulus 16 by plastics hinges at 20 and 22. The "closed" position of the wing 20 is shown in dotted lines at 24, and the other wing 18 can take up a similar position. When the two wings are in their closed positions, they will be locked by a snap locking feature consisting of an arm 26 and a detent 28. Each wing 18, 20 has a recess 30, 32 for receiving a fir-tree stud (not shown) on the fixed structure such as a vehicle body. Only one of the recesses 30, 32 will be in use at any one time, but the provision of two recesses means that the fastener can be secured at either side.

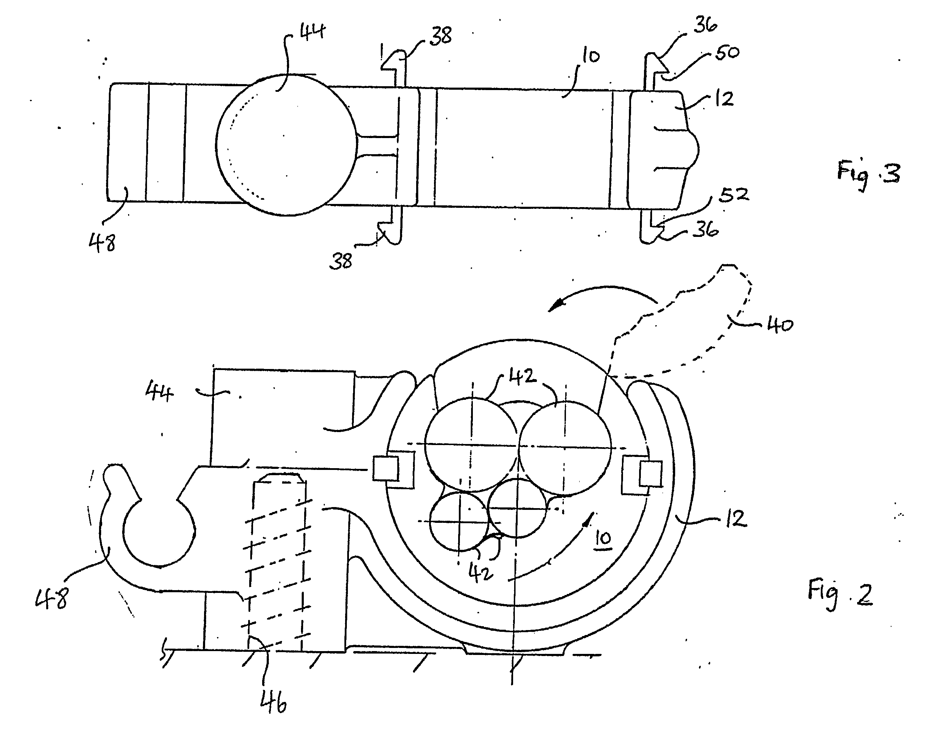

It will be seen from Figure 1 that the first body 10 has a pair of diametrically opposite retaining clips 34, 36 and these will be described in more detail in connection with the second embodiment of the invention shown in Figures 2, 3, 4 and 5.

In Figure 2 the second body 12 does not form a complete circle around the first body 10, and the first body has a gate 40 which can be opened and closed to allow the tubes 42 to be inserted or removed from the body. In this construction, the supporting member 44 is a single component as opposed to the two wings 18 and 20 of Figure 1. The supporting member 44 has a socket 46 for receiving a fir tree stud in the same way as in the previous embodiment. Also shown is an additional receiving clip 48 for a separately mounted pipe. As can be seen from Figures 3, 4 and 5 the retaining clips 36, 38 are part of the first body 10 and extend axially beyond the surfaces of the body. The spacing between the two opposing parallel faces 50 and 52 on each pair of clips is greater than the axial length of the second body 12 so that a limited degree of axial movement of the body 10 in the body 12 is permitted. Movement beyond this limited degree is prevented when one of the surfaces 50 or 52 comes into contact with the respective side face of the body 12.

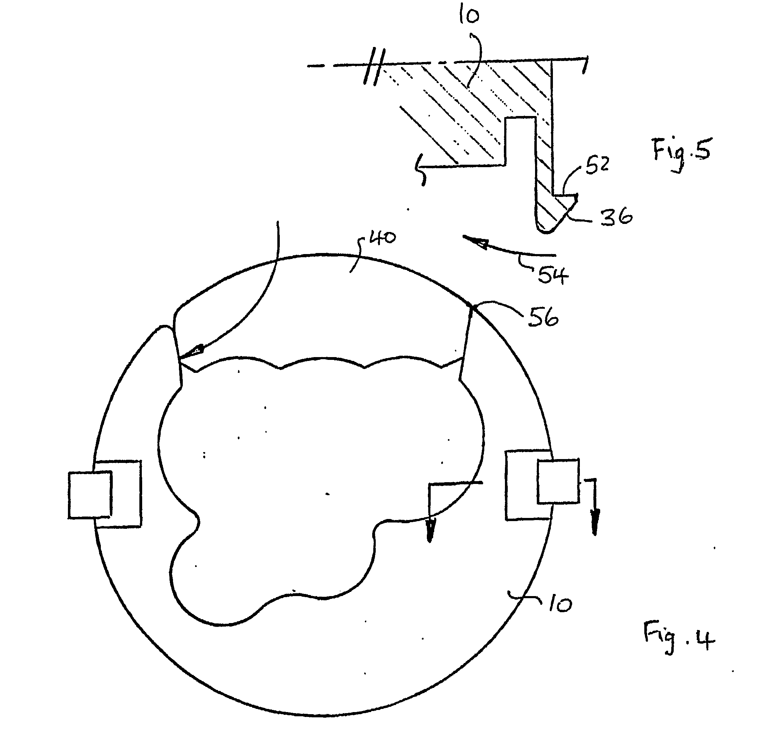

However because the clips are formed at the end of relatively unsupported arms (see Figure 5) it is possible for them to be bent back as indicated by arrow 54 in Figure 5 so that the body 10 can be axially separated from the body 12. This may be necessary in order to allow a particular pipe or pipes to be removed from the body 10, for servicing or replacement.

In Figure 4, the gate 40 of the body 10 is connected to the body through a plastics hinge 56.

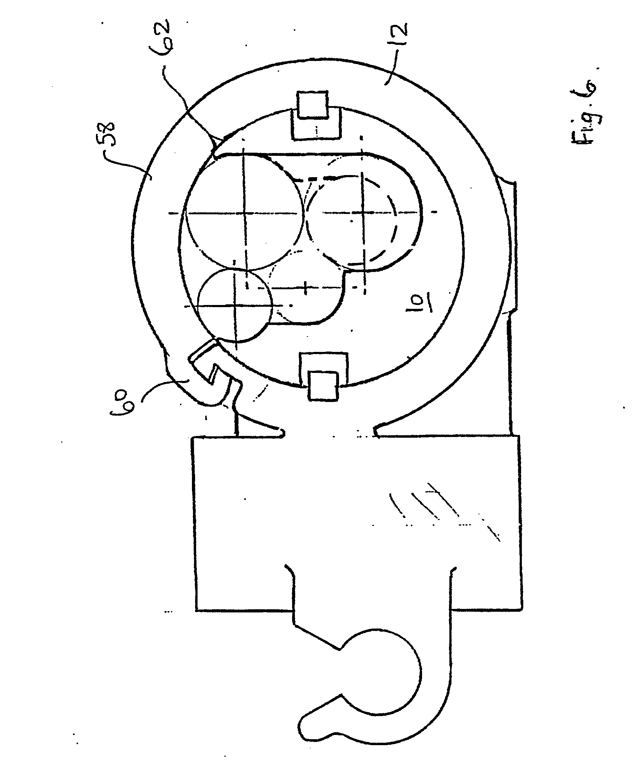

In the embodiment shown in Figure 6, the second body 12 now has a closable gate 58 with a snap-locking catch arrangement 60. Alternative catch forms are possible, and one alternative would be to place the catch at the hinge end of the gate 58 so that a detent (or recess) engages with a recess (or detent) on the second body itself. The first body 10 is held in the second body in the same way as before, and can be slid axially out of the body by manipulating the retaining clips 36, 38. Once the body 10 is out of the surrounding body 12, individual pipes can be separated. However to remove a separated pipe from the system entirely it is also necessary to open the gate 58, and this gate is connected to the rest of the body by a plastics hinge at 62.

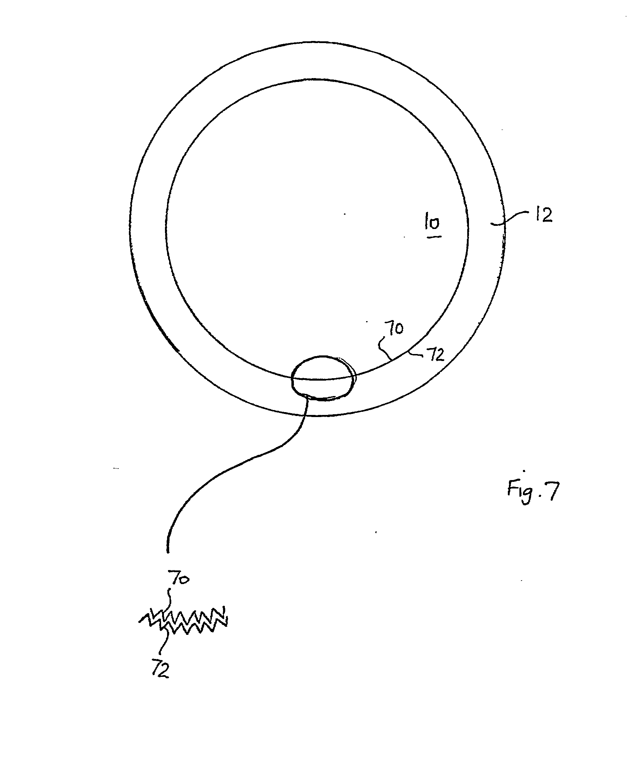

Because of the circular shape of the body 10 and its retention in a circular recess in the body 12, the orientation of the supporting member 44 (or the wings 18 and 20 at Figure 1) can be set at an infinite number of angular positions relative to the orientation of the bundle of tubes 42. However Figure 7 shows a detail of the adjacent faces of the first and second bodies, where the faces are both given a toothed form 70, 72. The teeth are of a shallow height so that they provide some resistance to rotation of the first body in the second, but do not prevent such turning. the bodies can then be aligned with one another by turning them a predetermined number of "clicks" in one direction or the other. The teeth lie parallel to the axis of the fastener, so that they do not impede axial sliding of the bodies within the limits to which this movement is subject.

In this way, it is not necessary to orient the supporting member at the time when the tubes are bundled together; the orientation can be done in a separate, possibly later stage.

## Claims

1. A fastener for securing together a group of elongate members and for allowing the group to be attached to a fixed structure, the fastener having a first body (10) which has a fixed shape and a cylindrical circumference, a recess (14) parallel to the cylinder axis and adapted to accommodate the elongate members, the recess being connected to the circumference through a single access passage, and a second body (12) having a cylindrical aperture and a supporting member (18, 20) by which the second body can be attached to a fixed structure, the cylindrical aperture being adapted to removably and rotatably receive the first body (10), wherein the recess (14) in the first body forms seats for all the elongate members accommodated in the bores such that the elongate members are in contact one with another.

2. A fastener as claimed in Claim 1, characterised in that the aperture is arranged so that the elongate members snap into their final positions.

3. A fastener as claimed in Claim 1 or Claim 2, characterised in that the cylindrical circumference of the first body (10) and the cylindrical aperture of the second body (12) have mutually engaging, axially parallel teeth to provide a ratchet connection giving a click-stop action to relative rotational movement between the bodies.

4. A fastener as claimed in any preceding claim, characterised in that the first body (10) has a limited degree of axial freedom of movement relative to the second body (12).

5. A fastener as claimed in any preceding claim, characterised in that the first body (10) can be removed from the second body (12) in an axial direction, after releasing a retaining catch.

6. A fastener as claimed in any preceding claim, characterised in that the aperture in the second body (12) is open at one portion around its circumference to allow one of the elongate members to be radially withdrawn.

7. A fastener as claimed in any one of Claims 1 to 5, characterised in that the aperture in the second body (12) has a gate (40) which can be opened to allow one of the elongate members to be radially withdrawn.

8. A fastener as claimed in any preceding claim, characterised in that both the first and second bodies are injection moulded from plastics material.

9. A fastener as claimed in any preceding claim, characterised in that the supporting member (18, 20) which forms part of the second body (12) is a socket adapted to be fitted to a fir tree stud on the fixed structure.

**Revendications**

1. Dispositif de fixation pour solidariser rigidement un groupe d'éléments longilignes, et pour permettre audit groupe d'être assujetti à une structure fixe, le dispositif de fixation comprenant un premier corps (10) présentant une configuration fixe et une circonférence cylindrique; un évidement (14) parallèle à l'axe du cylindre et conçu pour loger les éléments longilignes, l'évidement étant relié à la circonférence par l'intermédiaire d'un unique passage d'accès; et un second corps (12) muni d'une ouverture cylindrique, ainsi qu'un organe de support (18, 20) au moyen duquel le second corps peut être assujetti à une structure fixe, l'ouverture cylindrique étant adaptée pour recevoir le premier corps (10), de manière amovible et avec faculté de rotation, dispositif dans lequel l'évidement (14) pratiqué dans le premier corps forme des logements pour tous les éléments longilignes incorporés dans les perçages, de telle sorte que les éléments longilignes soient mutuellement en contact.

2. Dispositif de fixation selon la revendication 1, caractérisé par le fait que l'ouverture est conçue de façon que les éléments longilignes prennent leurs positions finales par déclic.

3. Dispositif de fixation selon la revendication 1 ou la revendication 2, caractérisé par le fait que la circonférence cylindrique du premier corps (10) et l'ouverture cylindrique du second corps (12) comportent des dents axialement parallèles, venant mutuellement en prise pour provoquer une interaction du type rochet qui exerce un effet d'arrêt, par cliquet, du mouvement rotatoire relatif desdits corps.

4. Dispositif de fixation selon une quelconque revendication précédente, caractérisé par le fait que le premier corps (10) possède un degré limité de liberté de mouvement axial par rapport au second corps (12).

5. Dispositif de fixation selon une quelconque revendication précédente, caractérisé par le fait que le premier corps (10) peut être dissocié du second corps (12), dans une direction axiale, après neutralisation d'un verrouillage de retenue.

6. Dispositif de fixation selon une quelconque revendication précédente, caractérisé par le fait que l'ouverture pratiquée dans le second corps (12) est ouverte sur l'une de ses régions circonférentielles, pour permettre l'extraction radiale de l'un des éléments longilignes.

7. Dispositif de fixation selon l'une quelconque des revendications 1 à 5, caractérisé par le fait que l'ouverture pratiquée dans le second corps (12) présente une pièce d'obturation (40), qui peut être ouverte pour permettre l'extraction radiale de l'un des éléments longilignes.

8. Dispositif de fixation selon une quelconque revendication précédente, caractérisé par le fait que les premier et second corps sont, l'un et l'autre, venus de moulage d'une matière plastique par injection.

9. Dispositif de fixation selon une quelconque revendication précédente, caractérisé par le fait que l'organe de support (18, 20), faisant partie du second corps (12), est constitué d'une douille conçue pour être ajustée sur un tenon tronconique solidaire de la structure fixe.

**Patentansprüche**

1. Halterung zur gemeinsamen Befestigung einer Gruppe von länglichen Elementen und um zu gestatten, daß die Gruppe an einer festen Struktur angebracht werden kann, wobei die Halterung einen ersten Körper (10), mit einer festen Form und einem zylindrischen Umfang, einer zur Zylinderachse parallelen Ausnehmung (14), die die länglichen Elemente aufnehmen kann und durch eine einzige Zugangsdurchführung mit dem Umfang verbunden ist, sowie einen zweiten Körper (12) mit einer zylindrischen Öffnung und einem Stützelement (18, 20) aufweist, durch das der zweite Körper an der festen Structur angebracht werden kann, wobei die zylindrische Öffnung den ersten Körper (10) abnehmbar und drehbar aufnimmt, dadurch gekennzeichnet, daß die Ausnehmung (14) im ersten Körper solche Sitze für alle in den Bohrungen aufgenommenen länglichen Elemente bildet, daß die länglichen Elemente sich berühren.

2. Halterung nach Anspruch 1, dadurch gekennzeichnet, daß die Öffnung so angeordnet ist, daß die länglichen Elemente in ihre Endpositionen einschnappen.

3. Halterung nach Anspruch 1 oder Anspruch 2, dadurch gekennzeichnet, daß der zylindrische Umfang des ersten Körpers (10) und die zylindrische Öffnung des zweiten Körpers (12) zur Bereitstellung einer Sperrzahnverbindung gegenseitig ineinander eingreifende, axial parallele Zähne aufweisen, durch die der relativen Drehbewegung zwischen den Körpern eine Klickrastwirkung verliehen wird.

4. Halterung nach einem der vorhergehenden Ansprüche, dadurch gekennzeichnet, daß der erste Körper (10) über einen begrenzten Grad an axialer Bewegungsfreiheit in bezug auf den zweiten Körper (12) verfügt.

5. Halterung nach einem der vorhergehenden Ansprüche, dadurch gekennzeichnet, daß der erste Körper (10) nach Lösen einer Halteklinke in einer axialen Richtung vom zweiten Körper (12) entfernt werden kann.

6. Halterung nach einem der vorhergehenden Ansprüche, dadurch gekennzeichnet, daß die Öffnung im zweiten Körper (12) an einem Teil um seinen Umfang offen ist, so daß eines der länglichen Elemente radial herausgezogen werden kann.

7. Halterung nach einem der Ansprüche 1 bis 5, dadurch gekennzeichnet, daß die Öffnung im zweiten Körper (12, ein Gatter (40) aufweist, das geöffnet werden kann, so daß eines der länglichen Elemente radial herausgezogen werden kann.

8. Halterung nach einem der vorhergehenden Ansprüche, dadurch gekennzeichnet, daß sowohl der erste als auch der zweite Körper aus Kunststoff spritzgegossen sind.

9. Halterung nach einem der vorhergehenden Ansprüche, dadurch gekennzeichnet, daß es sich bei dem Stützelement (18, 20), das einen Teil des zweiten Körpers (12) bildet, um eine Buchse handelt, in die ein Tannenbaumstift an der festen Struktur paßt.

Fig. 1

Fig. 3

Fig. 2

Fig. 5

Fig. 4

Fig. 6

EP 0 300 712 B1

Fig.7